# EUROPEAN PATENT APPLICATION

(11) **EP 1 731 886 A2**
(43) Date of publication of application: **13.12.2006**
(21) Application number: 06115184.1
(22) Date of filing: 08.06.2006
(51) Int. Cl.: G01H 9/00

(54) **Optoelectronic sensor for detecting fluid-transmitted sound waves**

(30) Priority: 09.06.2005 IT TO20050397
(71) Applicant: Cusano, Andrea, 81100 Caserta (IT); Whitehead Alenia Sistemi Subacquei Sp.A., 16154 Genova Sestri Ponente (IT); Cutolo, Antonello, 80075 Forio (IT); Campopiano, Stefania, 81100 Caserta (IT); Italia, Vincenzo, 82100 Montesarchio (IT); Giordano, Michele, 80055 Napoli (IT)
(72) Inventor: CUTOLO, Antonello, 80075, FORIO (IT); CUSANO, Andrea, 81100, CASERTA (IT); CAMPOPIANO, Stefania, 81100, CASERTA (IT); ITALIA, Vincenzo, 82100, MONTESARCHIO (IT); GIORDANO, Michele, 80055, NAPOLI (IT); BALBI, Mario, 80070, BACOLI (IT)
(74) Representative: Jorio, Paolo

(57) **Abstract**

An optoelectronic sensor for detecting sound waves transmitted by a fluid, and including a source (2, 30) of radiation; and at least one narrow-band optical filter (5, 9, 40a, 40b) formed on optical fibre (4, 7, 37a, 37b) and receiving at least part of the radiation from the source (2, 30). The narrow-band optical filter has a transfer function which moves as a function of the mechanical stress exerted on the narrow-band optical filter by an incident sound wave (U) carried by the fluid. And the sensor also includes a photodetecting device (10, 42a, 42b) for detecting at least part of the radiation from the narrow-band optical filter to determine the intensity and frequency of the detected radiation and to express the intensity and frequency of the incident sound wave (U).

## Description

The present invention relates to an optoelectronic sensor for detecting fluid-transmitted sound waves.

Sensors for detecting sound waves transmitted by a fluid (liquid/gaseous) are known comprising stratified stacked structures of piezoelectric materials separated by metal materials.

Sensors of this sort are large and heavy, and characterized by fairly poor frequency response.

It is an object of the present invention to provide an optoelectronic sensor for detecting fluid-transmitted sound waves, designed to eliminate the drawbacks of known sensors.

According to the present invention, there is provided an optoelectronic sensor for detecting sound waves transmitted by a fluid, **characterized by** comprising: a source of radiation; at least one narrow-band optical filter formed on optical fibre and receiving at least part of the radiation from said source, said narrow-band optical filter having a transfer function which moves as a function of the mechanical stress exerted on the filter by an incident sound wave carried by said fluid; and at least one photodetecting device for detecting at least part of the radiation from said narrow-band optical filter; said photodetecting device determining the intensity of the detected radiation to express the intensity of the sound wave, and the frequency of the detected radiation to express the frequency of the sound wave.

A preferred, non-limiting embodiment of the invention will be described by way of example with reference to the accompanying drawings, in which:
Figure 1 shows an optoelectronic sensor for detecting fluid-transmitted sound waves, in accordance with a first embodiment of the present invention;
Figure 2 shows a detail of the Figure 1 sensor;
Figure 3 shows a variation of the Figure 1 sensor;
Figure 4 shows the physical behaviour of the sensor.

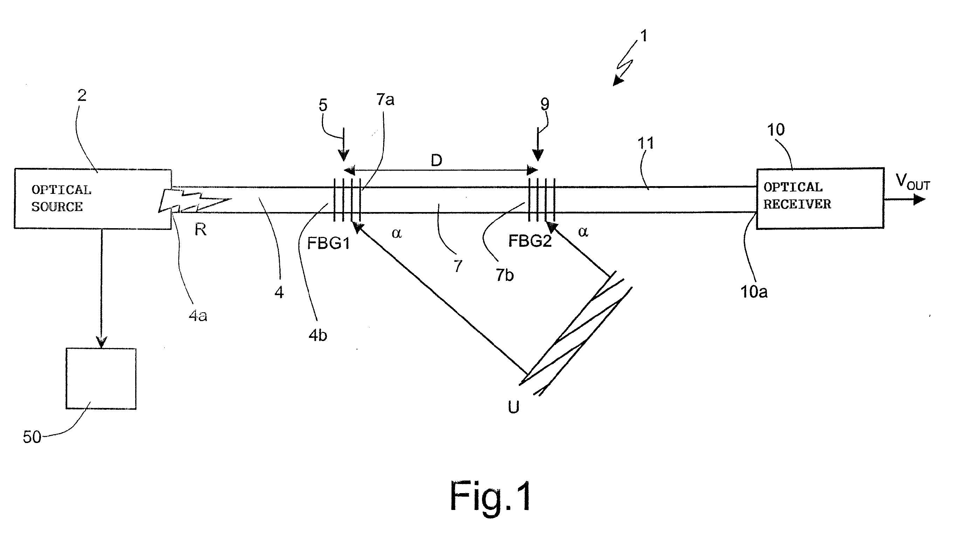

Number 1 in Figure 1 indicates as a whole an optoelectronic sensor for detecting sound waves transmitted by a fluid (liquid/gaseous).

Sensor 1 described in the preferred embodiment of the invention comprises:
- a source 2 of radiation R, conveniently defined by a semiconductor laser diode, though other, e.g. conventional radiation sources (an incandescent lamp) may obviously also be used;
- a first portion of optical fibre 4 which receives radiation R from source 2 at the input (defined by a first end 4a of fibre 4);
- a first narrow-band optical filter 5 at a second end 4b of fibre 4;
- a second portion of optical fibre 7 having an input (defined by a first end 7a of fibre 7) communicating with the output of filter 5;
- at least one second narrow-band optical filter 9 at the second end 7b of fibre 7; and
- a photodetecting device (optical receiver) 10 having an input 10a communicating over an optical fibre 11 with the output of optical filter 9.

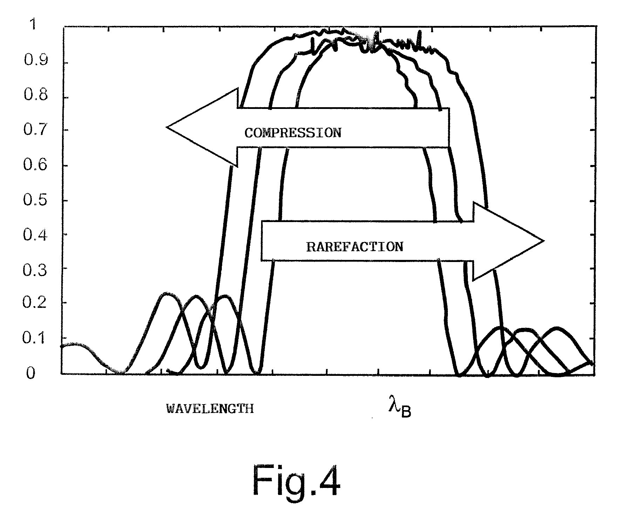

In the Figure 1 example of the present invention, the first and second narrow-band optical filters 5 and 9 have respective predetermined (normally different) transfer functions, each of which translates in the wavelength domain as a function of deformation (i.e. the sound wave) incident on the optical filter (Figure 4).

Narrow-band optical filters 5 and 9 are conveniently defined by respective Bragg gratings formed in optical fibres 4 and 7.

As is known, an optical fibre Bragg grating is a permanent periodic modulation (uniform grating) or aperiodic modulation of the fibre core refraction index.

The transfer function of a Bragg grating can be represented - in a cartesian graph showing wavelength λ along the x axis (Figure 4) and the inverse of transmittability (or reflectivity) along the y axis - by a curve having a peak centred at a given central wavelength λ_{B}.

As is known, external phenomena (such as mechanical stress, particularly mechanical stress produced by acoustic pressure) produce both a variation in the modulation period of the refraction index and a photoelastic-effect variation in the refraction index itself, thus modifying the transfer function of the grating and in particular the central wavelength λ_{B}.

In actual use, sensor 1 is immersed in a fluid (e.g. seawater), and the sound wave U transmitted by the fluid strikes the two Bragg gratings 5 and 9, which thus act as active elements of sensor 1.

The radiation R generated by source 2 is transmitted by optical fibre 4 to Bragg grating 5 which, acting as a narrow-band filter, transmits all the optical radiation outside the filtration band, and attenuates the optical radiation of a wavelength close to λ_{B1} of optical filter 5; the radiation transmitted by optical filter 5 reaches optical filter 9, which performs the same filtration function as above at the wavelength λ_{B2} of optical filter 9.

Finally, the radiation R through both optical filters 5 and 9 reaches optical receiver 10, which determines its optical power.

Using known interrogation methods and known wavelength multiplexing and demultiplexing techniques implemented by a processing unit 50 receiving the output signal from optical receiver 10, it is possible to work out the instantaneous displacement λ_{B1} and λ_{B2} of Bragg gratings 5 and 9 respectively.

Because of physical phenomena not explained in detail for the sake of simplicity, translations λ_{B1} and λ_{B2} therefore have the same frequency and an amplitude proportional to the external disturbance (i.e. sound wave U), so that, by means of known approximate analytical equations, processing unit 50 is able to determine the intensity and frequency of the incident sound wave U.

Moreover, given the distance D between the two optical filters 5 and 9, angle of incidence α of the sound wave can be worked out from the time pattern of displacements λ_{B1} and λ_{B2} by means of known trigonometric equations.

Any variation in the characteristics of sensitive elements 5 and 9 therefore results in a variation in the optical power reaching, and hence in the output voltage level of, optical receiver 10. The output voltage Vout of optical receiver 10 therefore has the same frequency as, and an amplitude proportional to, the incident sound wave U.

The sensor according to the present invention has numerous advantages, including the following:
- sensor 1 is cheap, lightweight and compact;
- sensor 1 responds rapidly, on account of the rapid change in the physical characteristics of sensitive elements 5 and 9 following deformation caused by wave U, thus permitting a pass band of about ten MHz;
- given the known flexible properties of optical fibres, optical sensor 1 is flexible and can therefore be fitted to surfaces of any shape, e.g. curved surfaces.

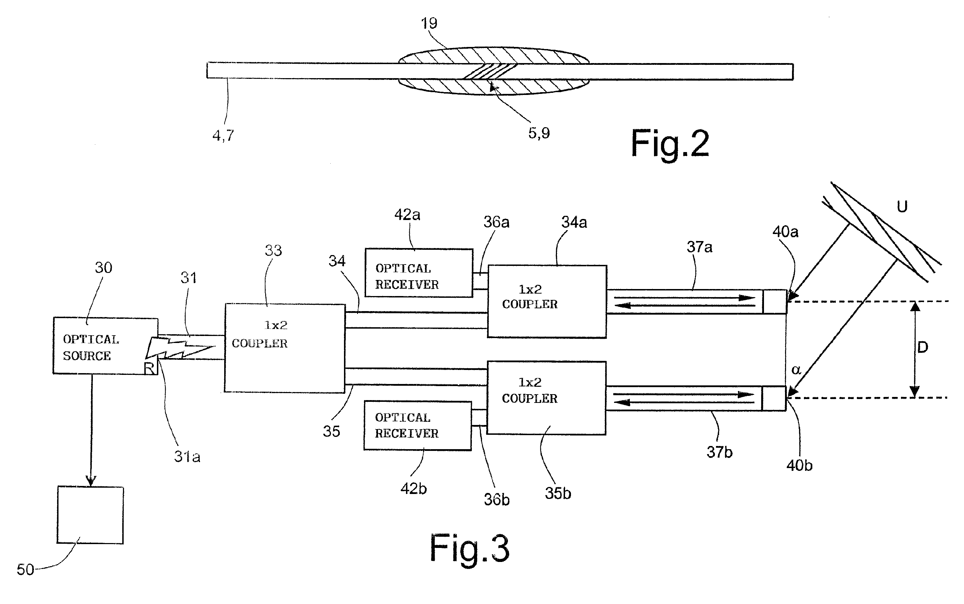

In a preferred embodiment (Figure 2), the portion of optical fibre 4, 7 internally forming Bragg grating 5, 9 is covered with a layer 19 of appropriate material (e.g. a low Young's modulus polymer).

According to the Applicant's test results, layer 19 improves the response of the sensor. That is, a Bragg grating with no appropriate cover layer, as is known, is capable of detecting acoustic signals having amplitude measurable in some megapascals, whereas, with an appropriate layer 19, it is capable of detecting acoustic signals having amplitude measurable in some pascals.

In an alternative embodiment (Figure 3), the narrow-band optical filters are defined by a number of films (purely by way of example, polymer material and metal material films) deposited on the ends of one or more optical fibres (refractometric sensor).

As with the Bragg grating, an incident sound wave produces a periodic and equal-frequency variation in both the optical properties of sensor 1, due to the elastic-optical effect, and in the dimensions of the sensor.

In other words, the number of films deposited on the end of the fibre perform in the same way as Fabry-Perot interferometer filters, whose thickness and refraction index, when the filters are struck by a sound wave, varies alongside the incident sound wave, thus resulting in a variation in the intensity of the light reflected at the interface.

The following is a description, purely by way of example, of one embodiment of a refractometric sensor featuring two optical fibres, each terminating with a number of films.

In the alternative embodiment shown in Figure 3, sensor 1 comprises:
- a radiation source 30 conveniently defined by a semiconductor laser diode or other optical radiation source;
- a first optical fibre 31 which receives the radiation R from source 30 at the input (end portion 31a);
- a 1x2 coupler 33 which receives the output signal from optical fibre 31, and divides the input radiation into two optical-fibre output branches 34, 35;
- at least two 1x2 couplers 34a, 35b which receive the radiation from respective fibres 34, 35, and transmit the input radiation to two optical-fibre portions 36a, 37a and 36b, 37b respectively;
- at least two sensitive elements 40a, 40b formed by depositing a number of films on the ends of the two fibres 37a and 37b;
- at least two optical receivers 42a, 42b input-connected to respective outputs of fibres 36a, 36b, and which receive the optical radiation reflected by respective sensitive elements 40a, 40b along the paths defined by respective fibres 37a, 37b and respective fibres 36a, 36b.

With reference to the simplified diagram in Figure 3, radiation R generated by source 30 is transmitted by optical fibre 31 to the first 1x2 coupler 33.

From 1x2 coupler 33, the optical radiation is transmitted via fibre portions 34 and 35, 1x2 couplers 34a and 35b, and fibres 37a and 37b to sensitive elements 40a and 40b, where it is reflected, as described previously, to 1x2 couplers 34a and 34b and eventually reaches receivers 42a and 42b, which convert the incoming radiation, modulated by the sound wave, into an electric signal.

The same known sensor-interrogation methods described in connection with Figure 1 may be used for both embodiments.

## Claims

1. An optoelectronic sensor for detecting sound waves transmitted by a fluid,
**characterized by** comprising:
- a source (2, 30) of radiation;
- at least one narrow-band optical filter (5, 9, 40a, 40b) formed on optical fibre (4, 7, 37a, 37b) and receiving at least part of the radiation from said source (2, 30); said narrow-band optical filter having a transfer function which moves as a function of the mechanical stress exerted on the narrow-band optical filter by an incident sound wave (U) carried by said fluid; and
- at least one photodetecting device (10, 42a, 42b) for detecting at least part of the radiation from said narrow-band optical filter; said photodetecting device determining the intensity of the detected radiation to express the intensity of the sound wave (U), and the frequency of the detected radiation to express the frequency of the sound wave.

2. A sensor as claimed in Claim 1, and comprising:
- a first narrow-band optical filter (5) formed on optical fibre (4) and receiving the radiation from said source (2) at the input (4a); and
- at least one second narrow-band optical filter (9) formed on optical fibre (7) and receiving the radiation from said first narrow-band optical filter (5);
said photodetecting device (10) detecting the radiation from said second narrow-band optical filter (9); said first (5) and said second (9) narrow-band optical filter having transfer functions which both move in the frequency range as a function of the mechanical stress exerted by an incident sound wave (U) on the first and second narrow-band optical filter;
and the sensor cooperating with a processing unit (50) which receives the signal generated by said photodetecting device (10) to determine the respective displacements λ_{B1} and λ_{B2} of the transfer functions of the first and second narrow-band optical filter, and to calculate the angle of incidence α of the sound wave as a function of said displacements λ_{B1} and λ_{B2} and of the distance D between the first and second narrow-band optical filter.

3. A sensor as claimed in Claim 2, wherein said first narrow-band optical filter (5) is formed directly on one end (4b) of an optical fibre (4) having another end (4a) to which said radiation (R) is supplied.

4. A sensor as claimed in Claim 2, wherein said first narrow-band optical filter (5) is defined by a Bragg grating formed in the respective optical fibre (4).

5. A sensor as claimed in Claim 2, wherein said second narrow-band optical filter (9) is defined by a Bragg grating formed in the respective optical fibre (7).

6. A sensor as claimed in Claim 4 or 5, wherein the portion of optical fibre (4, 7) internally forming the Bragg grating (5, 9) is covered with a layer (19) of appropriate material, in particular a low Young's modulus polymer.

7. A sensor as claimed in Claim 1, wherein said source (2) comprises a photodiode.

8. A sensor as claimed in Claim 1, and comprising:
- a first narrow-band optical filter (40a, 40b) formed on one end of an optical fibre (37a, 37b) and receiving the radiation from said source (2, 30); and
- means (34a, 35b) for transmitting the reflected radiation from said first narrow-band optical filter (40a, 40b) to said detecting means.

9. A sensor as claimed in Claim 8, wherein said first narrow-band optical filter (40a, 40b) is defined by a number of films, e.g. films of polymer material and films of metal material, deposited on the ends of an optical fibre.
